# EUROPEAN PATENT SPECIFICATION

(11) **EP 3 228 546 B1**
(45) Date of publication and mention of the grant of the patent: **18.05.2022**
(21) Application number: 17163769.7
(22) Date of filing: 30.03.2017
(51) Int. Cl.: B64F 1/34, B64F 1/36, H01M 16/00

(54) **MOBILE GROUND POWER UNIT AND METHOD OF USE**
MOBILES BODENSTROMAGGREGAT UND VERFAHREN ZUR VERWENDUNG
UNITÉ D'ALIMENTATION ÉLECTRIQUE MOBILE AU SOL ET PROCÉDÉ D'UTILISATION

(30) Priority: 31.03.2016 NL 2016525
(43) Date of publication of application: 11.10.2017
(73) Proprietor: Bredenoord B.v., 7325 WT Apeldoorn (NL)
(72) Inventor: BRESSER, Marinus Christiaan, 7325 WT Apeldoorn (NL); VAN RIJS, Adriaan Louis, 7325 WT Apeldoorn (NL)
(74) Representative: V.O.

(56) References cited:
- EP-A1- 2 237 351
- WO-A1-02/21659
- WO-A1-2005/119877
- WO-A1-2013/112119
- WO-A2-02/11267
- DE-U1-202008 015 623
- US-A1- 2008 085 430
- US-B1- 6 424 891
- US-B2- 7 166 929

## Description

### BACKGROUND

The invention relates to a mobile ground power unit for supplying electrical power to an external load, for instance an aircraft parked at a gate or terminal or parked at a parking location of an airport remote from a gate or terminal.

Aircrafts, in particular passenger aircrafts, comprise a large number of electric devices which require electrical power for the operation thereof. For this purpose, modern aircraft comprise an on-board electrical system. The electrical power is generated by engine generators which in turn are driven by the engines of the aircraft. The engine generators generate an alternating current (AC) output of 115 Volt or 230 Volt at a frequency of 400 Hz.

An aircraft which is parked at an airport for a significant length of time, is typically powered from auxiliary systems designed to allow the aircraft electrical systems to operate without the need to operate the aircraft engines. The needed auxiliary power is often supplied by movable ground power units arranged on wheeled trailers.

Aircrafts are provided with connectors for connecting an aircraft to an external auxiliary power unit, such as a ground power unit which is configured to generate a 115 V AC output of a frequency of 400 Hz. In particular, the generator of a ground power unit is configured similar to an aircraft engine generator and comprises typically three generator windings which are arranged in a star configuration. The generator is usually driven by a diesel engine such that each one of the three generator windings generates a 115 AC voltage at 400 Hz. Such an aircraft ground power unit is for example disclosed in US 4,684,825.

A more recent development in ground power units is for example disclosed in WO 2005/119877. The ground power unit as disclosed in WO 2005/119877 comprises a portable power source that includes an energy storage device to supply an output power to a device, such as an idle aircraft. The portable power source also includes an engine driven power source comprising a combustion engine which is coupled to a generator. The generator is arranged in a rechargeable association with the energy storage device. In addition, a controller is included that switches an electrical configuration of the power source to selectively deliver power between the energy storage device and/or the engine driven power source. The ground power unit as described in WO 2005/119877 is able to provide on-demand responsiveness to provide remote power to an aircraft utilizing the combination of the energy storage device and the engine driven power source.

It is an object of the present invention to at least provide an alternative ground power unit for supplying electrical power to an external load.

### SUMMARY OF THE INVENTION

According to a first aspect, the present invention provides a power unit for supplying electrical power to an external load, the ground power unit comprises:
a rechargeable battery pack,
an inverter comprising an input which is connected to the rechargeable battery pack, and an output for connecting the ground power unit to the external load, wherein the inverter is arranged to convert DC electrical power from the rechargeable battery pack into an AC power output,
a fuel cell power plant which is connected to the rechargeable battery pack via a converter, which converter is arranged to convert the current and/or voltage from the fuel cells to a level which allows to charge the rechargeable battery pack, and
a controller which arranged for controlling the converter based on the power level of the rechargeable battery pack and/or on the amount of electrical power demanded by said load,
wherein the ground power unit is arranged to determine the actual charging conditions of rechargeable battery pack, and to control the converter based on the actual charging conditions.

Accordingly, the ground power unit of the present invention can provide on-demand remote power to an external load, such as an aircraft, by means of the battery pack, which battery back can be recharged by means of a fuel cell power plant. An advantage of utilizing a fuel cell power plant in the ground power unit of the present invention is, that a fuel cell power plant produces less air pollution and noise than an engine driven power source comprising a combustion engine which is coupled to a generator.

However, a fuel cell power plant cannot directly deliver AC electrical power suitable to provide external power to an aircraft as an engine driven power source can.

In addition, because fuel cell power plants are load following, a fuel cell power plant is usually arranged to deliver electrical power directly to the load which needs to be driven, optionally via a power conditioner. Examples of such systems are disclosed in DE 20 2008 015 623 U1, US 2008/0085430 A1, US 7,166,929 B2, and EP 2 237 351 A1. Load following means that the fuel cell power plant adjusts its power output as demand for electricity by the load fluctuates. Contrarily to the teachings of such prior art documents, the present invention proposes to arrange the fuel cell power plant to recharge the battery pack and to arrange the battery pack to deliver electrical power to the external load.

However, the direct current (DC) power output from a fuel cell power plant is usually not suitable for recharging a rechargeable battery, because the output voltage of a fuel cell power plant is dependent of the load connected to the output of the fuel cell power plant. According to the invention a converter is provided to convert the voltage and the current as provided by the fuel cells, in particular to convert, set and/or control the output voltage of said converter to a level which allows to charge the rechargeable battery pack.

According to the present invention, the controller is arranged for controlling the converter, in particular to set the output voltage and output current of the converter. The controller does not set the level of electrical power generated by the fuel cells directly. By setting the output voltage and the output current of the converter, the controller controls the power taken-off from the fuel cell power plant, and an internal controller of the fuel cell power plant will react by powering up the fuel cell power plant to make more power available.

According to the invention, the ground power unit, in particular the controller thereof, is arranged to determine the actual charging conditions of rechargeable battery pack, and to control the converter based on the actual charging conditions. Accordingly, the charging conditions of the rechargeable battery pack is regularly or substantial continuously monitored, and the converter is adjusted when the actual charging conditions change to ensure that the electrical power generated by the fuel cell power plant can recharge the battery pack.

In an embodiment, the inverter comprises an AC/AC converter which is arranged to convert 50 Hz AC into 400 Hz AC, wherein the AC/AC converter comprises an AC(50Hz)/DC converter which is arranged in series with a DC/AC(400Hz) converter, wherein the output of the rechargeable battery pack and/or of the fuel cell power plant is connected to the DC input of the DC/AC(400Hz) converter. Accordingly, an AC/AC converter can be used as inverter to change the DC output of the rechargeable battery pack and/or of the fuel cell power plant to the required 400 Hz AC as output of the ground power unit.

In an embodiment, the AC(50Hz)/DC converter is connected to a connector for coupling the ground power unit to an external power grid, preferably the public power grid. This allows to connect the ground power unit to the power grid. The 50 Hz AC power from the power grid is converted into a DC power by the AC(50Hz)/DC converter, which DC power can be used to recharge the rechargeable battery pack.

In an embodiment where the ground power plant is designed to provide external power to a load, the fuel cell power plant comprises one or more fuel cells which are arranged to provide a maximum power output, wherein the maximum power output is selected at a level between an average required power and a maximum peak power of said load. In an embodiment the maximum power output of the one or more fuel cells is selected in a range from 110% to 150% of the average required power of said load. This allows to provide access electrical power by the one or more fuel cells when the load demand is substantially equal or less than the average required power, which access electrical power can be used for recharging the rechargeable batteries, preferably even during the delivery of the average required power to the load. In case the load demand is equal to the maximum peak power of said load, which is usually for a relatively short moment of time, the required electrical power is at least mainly provided by the rechargeable batteries.

In an embodiment, the controller is arranged to control the magnitude of the generated electrical power by the fuel cell power plant by controlling the converter on the basis of the total stored electrical power in the rechargeable battery pack.

In an embodiment, the controller is arranged to vary the magnitude of the generated electrical power by the fuel cell power plant by controlling the converter in accordance with a substantial continues function of the total stored electrical power in the rechargeable battery pack.

In an alternative embodiment, the controller is arranged to set the magnitude of the generated electrical power by the fuel cell power plant to a particular level when the total stored electrical power in the rechargeable battery pack is in a certain range. In particular, the magnitude of the generated electrical power by the fuel cell power plant is set by controlling the converter.

In an embodiment, the controller is arranged to control the magnitude of the generated electrical power by the fuel cell power plant by controlling the converter on the basis of the actual demand of electrical power by the load connected to the ground power unit. In a preferred embodiment, the controller is arranged to control the converter slowly and/or with a certain time delay with respect to a change in the actual power demand of the load. Accordingly the converter initiates an adjustment of the magnitude of the generated electrical power by the fuel cell power plant slowly and/or with a certain time delay with respect to a change in the actual power demand of the load. Any quick increases in the power demand of the load are dealt with by the rechargeable battery pack.

In an embodiment, the controller is arranged to accelerate the control of the converter and/or reduce the time delay, when the total stored electrical power in the rechargeable battery pack decreases. Accordingly the converter initiates an acceleration of the adjustment of the magnitude of the generated electrical power by the fuel cell power plant and/or a reduction of the time delay of the adjustment of the magnitude of the generated electrical power by the fuel cell power plant with respect to a change in the actual power demand of the load, when the total stored electrical power in the rechargeable battery pack decreases.

In a further embodiment, the load is an aircraft and the controller is arranged to activate a predefined control program or control schedule to control the generated electrical power by the fuel cell power plant by controlling the converter based on the type and/or class of aircraft that is connected to the ground power unit, and/or on the expected length of time that the aircraft is parked at the airport. The inventors particularly noted that the handling of an aircraft at an airport, in particular a passenger air craft, usually comprises the same actions and procedures. Such actions and procedures comprise, for example, the disembarking of passengers, unloading luggage, cleaning the aircraft, resupplying the on-board catering, refueling the aircraft, loading new luggage, and boarding of new passengers. During these actions and procedures, the actual power demand of a particular airplane as a function of time can be readily predicted and planned, and thus can be incorporated in a predefined control program or control schedule. According to an embodiment, the converter is controlled by the controller to initiate a generation of electrical power by the fuel cell power plant of the ground power unit according to a schedule and/or program based on the type and/or class of aircraft, and/or on the expected duration that the aircraft is parked at the airport, in order to ensure that there is always enough electrical power in the rechargeable battery pack to guarantee an uninterrupted provision of external power to the aircraft by the ground power unit.

In an embodiment, the rechargeable battery pack is sized to store up to 60% of the required electrical power demand for handling of an aircraft at an airport. Preferably, the rechargeable battery pack is sized to store up to 80% of the required electrical power demand for handling of an aircraft at an airport. Accordingly, the battery pack is sized to store more than half the expected power demand for handling of an aircraft at the airport, which power in the battery pack is readily available as soon as the aircraft is connected to the ground power unit. Accordingly, the ground power unit of the inventions has substantially no startup time. In addition, the large capacity of the rechargeable battery pack ensures that the ground power unit can provide electrical power preferably more than half the expected duration that the aircraft is parked at the airport, which provides reliability in operation, at least at the first part of the handling. In addition, any failure in the system can be readily detected well before the rechargeable battery pack would run out of power.

In an embodiment, the fuel cell power plant comprises pumps, valves, and/or other components which require electrical power in order to operate, wherein said pumps, valves, and/or other components are connected to the rechargeable battery pack. Accordingly, the pumps and/or valves, and/or other components of the fuel cell power plant which require electrical power in order to operate, are powered by the rechargeable battery pack. This allows autonomous operation of the fuel cell power plant, and thus autonomous operation of the ground power unit.

In an embodiment, the ground power unit comprises a wheeled undercarriage wherein one or more of the wheels of the wheeled undercarriage is provided with a motor, preferable an in-wheel motor, for driving a rotation of said one or more wheels. This motor is preferably an electro-motor which is connected to the rechargeable battery pack for supplying power to said motor. The motor allows to relocate and/or move the ground power unit over a short distance, for example up to 200 meters, without the need of a tractor to tow the ground power unit.

According to a second aspect, the present invention provides a method comprising the steps of
connecting a ground power unit as described
above to an aircraft, and
using the ground power unit to provide external electrical power to the aircraft, preferably to allow electrical systems of said aircraft to operate without the need to operate the aircraft engines.

### BRIEF DESCRIPTION OF THE DRAWINGS

The invention will be elucidated on the basis of an exemplary embodiment shown in the attached drawings, in which:
Figure 1 shows a schematic representation of a ground power unit according to an exemplary embodiment of the present invention, and
Figure 2 shows a schematic diagram of the most important components of the ground power unit according to an embodiment of the present invention.

### DETAILED DESCRIPTION OF THE INVENTION

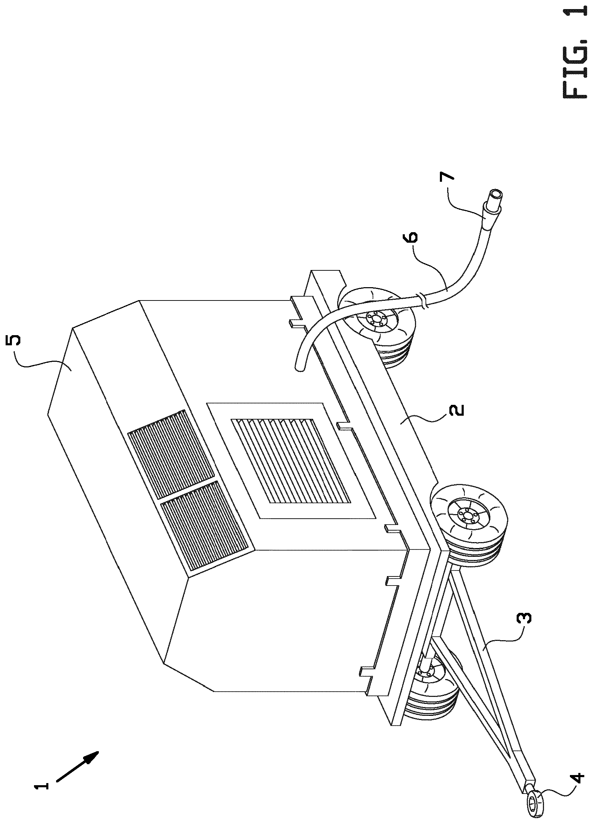

Figure 1 schematically shows an aircraft ground power unit 1 according to an exemplary embodiment of the 30 present invention. The ground power unit 1 comprises a wheeled undercarriage 2 comprising a tow bracket 3 with a coupling ring 4 at a distal end of the tow bracket 3. By coupling the coupling ring 4 to a towing hook of a towing vehicle (not shown) the ground power unit can be 35 transported and positioned at a desired position near to a parking spot for an aircraft.

The ground power unit 1 further comprises a housing 5 in which the various components of the ground power unit as described in more detail below, are accommodated. In addition, the ground power unit 1 comprises an electrical cable 6 which extends out of the housing 5 and which electrical cable is provided with a connector 7 for coupling with a mating connector on an aircraft (not shown). Accordingly, the ground power unit 1 is arranged to provide electrical power to the electrical systems within an aircraft, thus excluding any demand for electrical power by the propulsion devices of the aircraft. The energy demand of the electrical systems within an aircraft are also denoted as the 'Hotel load'.

Inside the housing 5, at least a fuel cell power plant 10, a rechargeable battery pack 20, and an inverter 30 are arranged, wherein the rechargeable battery pack 20 is arranged for providing electrical power suitable for powering the electrical devices in an aircraft, and wherein the fuel cell power plant 10 is arranged to recharge the battery pack 20 when necessary.

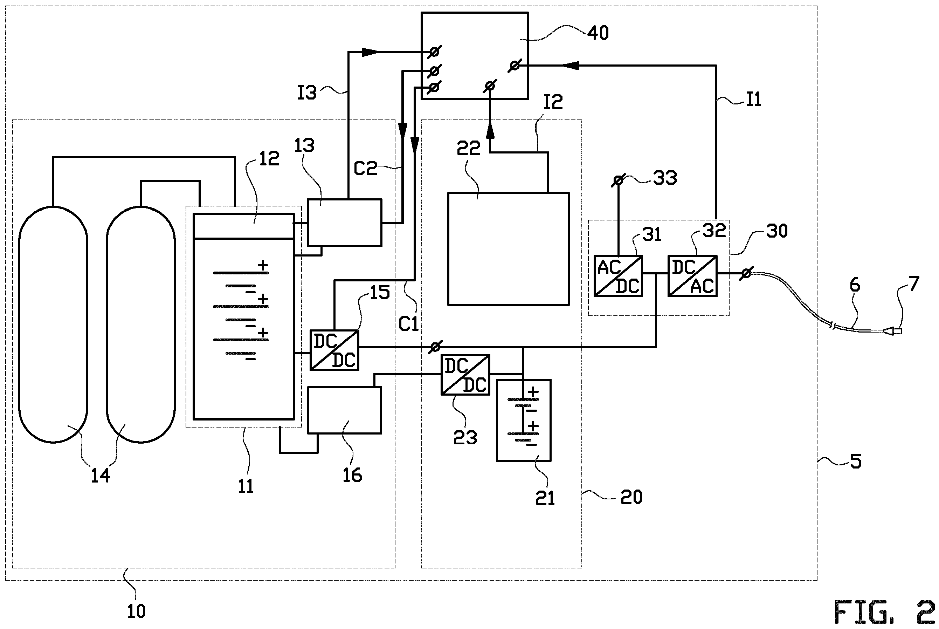

As schematically shown in figure 2, the fuel cell power plant 10 comprises one or more fuel cells 11 and a fuel cell management device 12. The fuel cell management device 12 is, *inter alia,* arranged for measuring the voltage of the individual fuel cells and for optimizing the working conditions of the one or more fuel cells based on these measurements.

The level of electrical power generated by the fuel cells 11 is controlled by a fuel cell control device 13 in reaction of a power taken-off via the DC/DC converter 15. When the magnitude of the power taken-off via the DC/DC converter 15 increase or decrease, the fuel cell control device 13 senses a change in the working conditions of the fuel cells 11 and adjusts the settings of the fuel cells 11 to increase or decrease the electrical power generated by the fuel cells 11. Accordingly the fuel cell control device 13 controls the working of the fuel cells 11 and sets the working conditions of the fuel cells 11 substantially autonomous, substantially without requiring control signals from the controller 40. The level of electrical power generated is controlled by controlling the amount and/or the flow rate of fuel and/or oxygen injected in the fuel cells 11. The fuel comprises for example Hydrogen gas from hydrogen storage tanks 14. Oxygen is for example provided by using the ambient air.

The fuel cells 11 generate a direct current (DC) power output which is usually not suitable for recharging a rechargeable battery. Accordingly, the ground power unit 1 comprises a DC/DC converter 15 which is arranged to convert the DC voltage and current from the fuel cells 11 to set and/or control the voltage at the side of the DC/DC converter 15 facing away from the fuel cells 11 to a level which allows to charge the rechargeable batteries 21. The level to which in particular the DC voltage from the fuel cells 11 is converted is set by a control signal C1 from the controller 40. Preferably the output voltage of the DC/DC converter 15, which is the voltage at the side of the DC/DC converter 15 facing away from the fuel cells 11, is higher than the voltage of the rechargeable battery pack 20, in particular the rechargeable batteries 21 thereof.

As indicated in figure 2, the DC/DC converter 15 can be part of the fuel cell power plant 10. However, the DC/DC converter 15 can also be arranged as part of the rechargeable battery pack 20, or as a separate unit in the housing 5 of the ground power unit 1.

In addition to the fuel cell management device(s) 12, the fuel cell power plant 10 also comprises pumps and/or valves for controlling the flow of fuel and/or oxygen, which require electrical power in order to operate. These pumps and/or valves, and/or other components of the fuel cell power plant 10 which require electrical power in order to operate, are connected to an auxiliary power input 16 and are usually powered by an external power supply. According to the present invention, the auxiliary power input 16 is connected to the rechargeable battery pack 20, and the pumps and/or valves, and/or other components of the fuel cell power plant 10 which require electrical power in order to operate, are powered by the rechargeable battery pack 20, in particular the rechargeable batteries 21 thereof. This allows autonomous operation of the fuel cell power plant 10, and thus the ground power unit.

Usually, the pumps and/or valves, and/or other components of the fuel cell power plant 10 which require an electrical voltage lower than the Voltage of the rechargeable batteries 21. Accordingly, a further DC/DC converter 23 is arranged between the rechargeable batteries 21 and the auxiliary power input 16, which further DC/DC converter 23 is arranged to provide an at least substantially constant voltage to the auxiliary power input 16, which is for example set to 24 V.

As schematically shown in figure 2, the rechargeable battery pack 20 comprises a set of rechargeable batteries 21 which are connected to the DC/DC converter 15 for providing electrical power for recharging the rechargeable batteries 21. The rechargeable batteries 21 are also connected to the inverter 30 as will be described in more detail below. Furthermore, the rechargeable batteries 21 are connected to the auxiliary power input 16 of the fuel cell power plant 10 as already indicated above.

Furthermore, the rechargeable battery pack 20 comprises a battery management device 22 which is, *inter alia,* arranged for monitoring the individual rechargeable batteries of the set of rechargeable batteries 21, and for optimizing the working conditions of the rechargeable batteries 21. The battery management device 22 is, for example, arranged to prevent operation outside each individual battery's safe operating area (for example one or more of a max-charge, min-charge, safe temperature range) and to balance individual batteries to eliminate state of charge mismatches.

According to the present invention, the battery management device 22 also is arranged to determine and monitor the total stored electrical power in the set of rechargeable batteries 21. The data obtained by the battery management device 22 (for example one or more of a max-charge, min-charge, safe temperature range, and/or the total stored electrical power) is provided to the controller 40 via the information signal 12, and the controller 40 is arranged to determine the actual charging conditions of the set of rechargeable batteries 21, since these charging conditions can change in time and, *inter alia,* determine the required voltage level necessary to charge the rechargeable batteries 21. Subsequently, the controller 40 is arranged to produce a control signal C1 based on these charging conditions, which control signal C1 is directed to the DC/DC converter 15.

In addition, the controller 40 is also arranged to provide a start or stop signal C2 to the fuel cell control device 13. For example, in case the set of rechargeable batteries 21 are optimally charged as presented to the controller via information signal 12, and there is no demand to deliver electrical power to an external device as presented to the controller 40 via information signal I1, the controller 40 can send a stop signal to the fuel cell control device 13 to shut down the fuel cells 11. When subsequently an aircraft is connected to the ground power unit and takes off electrical power from the set of rechargeable batteries 21, the controller 40 can send a start signal to the fuel cell control device 13 to start the fuel cells 11 to generate electrical power.

It is noted that the controller 40 is arranged to set the output voltage of the DC/DC converter 15, and to control the output current of the DC/DC converter 15. The controller 40 does not set the level of electrical power generated by the fuel cells 11 directly. By setting the output voltage and the output current of the DC/DC converter 15, the controller 40 controls the power taken-off from the fuel cell power plant 10 and the fuel cell control device 13 will react by powering up the fuel cells 11 to make more power available.

It is noted that the rechargeable battery pack 20 is able to provide on-demand remote power to an aircraft.

The fuel cell power plant 10 and the rechargeable battery pack 20 can provide a DC power output which is not suitable for providing remote power to an aircraft. Usually an aircraft requires a 115 V AC at a frequency of 400 Hz. As schematically shown in figure 2, the ground power unit comprises an inverter 30 which changes direct current (DC) into alternating current (AC). In the present example, the inverter 30 comprises a AC/AC converter which is arranged to convert 50 Hz AC into 400 Hz AC. Such converters are readily available and can be used for example to provide remote power to an aircraft using the public power network. The inventors have noted that such AC/AC converters comprises an AC (50 Hz)/DC converter 31 and a DC/AC (400 Hz) converter 32 in series. By connecting the output of the rechargeable battery pack 20 and/or of the fuel cell power plant 10 to the DC input of the DC/AC (400 Hz) converter 32, an AC/AC converter can be used as inverter 30 to change the DC output of the rechargeable battery pack and/or of the fuel cell power plant 10 to the required 400 Hz AC as output of the ground power unit 1.

It is noted, that the AC (50 Hz)/DC converter 31 according to the example shown in figure 2 is connected to a connector 33 for coupling the ground power unit 1 to an external power grid (not shown), preferably the public power grid. This allows to connect the ground power unit 1 to the power grid. The 50 Hz AC power from the power grid is converted into a DC power by the AC(50Hz)/DC converter 31, which DC power can be used to recharge the rechargeable battery pack 21.

It is noted that instead of using part of an AC/AC converter as indicated in the exemplary embodiment in figure 2, also a dedicated DC/AC inverter can be used, thus without the AC/DC converter 31.

As schematically shown in figure 2, the fuel cell power plant 10 comprises a controller 40 for controlling and/or monitoring the various components of the ground power unit 1.

In particular, the controller 40 is connected to the inverter 30 which delivers the required 400 Hz AC output. When an external load, such as an aircraft, is connected to the ground power unit 1 and takes off electrical power from the ground power unit 1, the demand of electrical power by the load can be determined by a detection circuit in the inverter 30. The inverter 30 is arranged to produce a power demand signal I1 based on the determined power demand, which power demand signal I1 is directed to the controller 40.

The controller 40 is also connected to the battery management device 22. The battery management device 22 is arranged to produce battery information signals 12 based on, *inter alia,* the current total stored electrical power in the set of rechargeable batteries 21, which battery information signals 12 are directed to the controller 40. In addition, the battery management device 22 may also provide information about the current status of the individual rechargeable batteries of the set of rechargeable batteries 21 and/or the actual charging conditions of the set of rechargeable batteries 21 to the controller 40, and send such information via the battery information signal 12 to the controller 40.

Furthermore, the controller 40 is connected to the fuel cell power plant 10, in particular the fuel cell control device 13 thereof. The controller 40 is arranged to produce start or stop signal C2, which start or stop signal C2 is directed to the fuel cell control device 13 to start or stop the operation of the fuel cells 11. In addition, the controller 40 may also be connected to the fuel cell management device 12 via the fuel cell control device 13. The fuel cell management device 12 may provide information about, *inter alia,* the voltage of the individual fuel cells and/or the working conditions of the one or more fuel cells, and can send this information via an information signal 13 to the controller 40.

The controller 40 is arranged to monitor and/or control the operation of the ground power unit 1, based on the information provided by the inverter 30, the battery management device 22 and the fuel cell management device 12 via the fuel cell control device 13. In an embodiment the controller 40 is remotely accessible in order to remotely control the operation of the ground power unit 1 and/or to remotely monitor the performance of the ground power unit 1.

In a preferred embodiment, where the ground power unit is designed to provide external power to a load, such as a passenger air plane, the one or more fuel cells 11 are arranged to provide a maximum power output, which maximum power output is selected at a level between the average required power and the maximum peak power of said load. In an embodiment the maximum power output of the one or more fuel cells 11 is selected in a range from 110% to 150% of the average required power. This allows to provide access electrical power by the one or more fuel cells 11 when the load demand is substantially equal or less than the average required power, which access electrical power can be used for recharging the rechargeable batteries 21. In case the load demand is equal to the maximum peak power of said load, which is usually for a relatively short moment of time, the required electrical power is at least mainly provided by the rechargeable batteries 21.

For example, in case a parked passenger air plane requires typical 40 to 50 kW on average and peak power of approximately 90 kW, the one or more fuel cells 11 of the fuel cell power plant 10 are arranged to have a maximum electrical power capacity of approximately 60 kW. The rechargeable battery pack 20 is for example sized to provide a maximum power of 100 kW and to store 25 kWh of electrical power.

In an exemplary embodiment, the controller 40 is arranged to control the magnitude of the generated electrical power by the fuel cells 11 by controlling the converter 15 on the basis of the total stored electrical power in the set of rechargeable batteries 21. As indicated above, controlling the settings of the converter 15 initiates a change in the magnitude of the electrical power generated by the fuel cells 11. For example, when the set of rechargeable batteries 21 are optimally or fully charged, the controller 40 can control the converter 15 to initiate a change in the magnitude of the generated electrical power by the fuel cells 11 to a low level, for example less than 10 % of the maximum electrical power capacity of the fuel cells 11.

When the total stored electrical power in the set of rechargeable batteries 21 decreases, the controller 40 is arranged to increase the magnitude of the generated electrical power by the fuel cells 11.

In an exemplary embodiment, the controller 40 is arranged to vary the magnitude of the generated electrical power by the fuel cells 11 by controlling the converter 15 in accordance with a substantial continues function of the total stored electrical power in the set of rechargeable batteries 21.

In an alternative exemplary embodiment, the controller 40 is arranged to set the magnitude of the generated electrical power by the fuel cells 11 by controlling the converter 15, in particular setting the output voltage and output current thereof, to a particular level when the total stored electrical power in the set of rechargeable batteries 21 is in a certain range. For example, when the total store electrical power in the set of rechargeable batteries 21 is in a range between 80% and 100% of the optimal or full charge, the converter is controlled to set the magnitude of the generated electrical power by the fuel cells 11 to 10 % of the maximum electrical power capacity of the fuel cells 11. When the total store electrical power in the set of rechargeable batteries 21 is in a range between 60% and 80% of the optimal or full charge, the converter is controlled to set the magnitude of the generated electrical power by the fuel cells 11 to 40 % of the maximum electrical power capacity of the fuel cells 11. When the total store electrical power in the set of rechargeable batteries 21 is in a range between 40% and 60% of the optimal or full charge, the converter is controlled to set the magnitude of the generated electrical power by the fuel cells 11 to 80 % of the maximum electrical power capacity of the fuel cells 11. When the total store electrical power in the set of rechargeable batteries 21 is below 40% of the optimal or full charge, the converter is controlled to set the magnitude of the generated electrical power by the fuel cells 11 to 100 % of the maximum electrical power capacity of the fuel cells 11. It is noted that the above example is not limiting and that the controller 40 can be adjusted to other ranges and magnitude settings to provide an adequate functioning of the ground power unit 1 of the present invention.

Alternatively, or in addition, the controller 40 is arranged to control the magnitude of the generated electrical power by the fuel cells 11 by controlling the converter 15 on the basis of the actual demand of electrical power by a load connected to the ground power unit 1. It is however preferred that the controller 40 is arranged to control the converter 15 to initiate an adjustment of the magnitude of the generated electrical power by the fuel cells 11 slowly and/or with a certain time delay with respect to a change in the actual power demand of the load. Any quick increases in the power demand of the load are dealt by the rechargeable batteries 21.

In an embodiment, the controller 40 is arranged to accelerate the initiated adjustment of the magnitude of the generated electrical power by the fuel cells 11 and/or reduction of the time delay of the adjustment of the magnitude of the generated electrical power by the fuel cells 11 with respect to a change in the actual power demand of the load when the total stored electrical power in the set of rechargeable batteries 21 decreases. In an exemplary embodiment, the controller 40 is arranged to initiate an acceleration of said adjustment and/or reduction of the time delay of said adjustment in accordance with a substantial continues function of the total stored electrical power in the set of rechargeable batteries 21, in particular in accordance with a substantial continues function of the decrease of the total stored electrical power in the set of rechargeable batteries 21. In an alternative exemplary embodiment, the controller 40 is arranged to initiate an acceleration of said adjustment and/or reduction of the time delay of said adjustment to a particular level when the total stored electrical power in the set of rechargeable batteries 21 has decreased into a certain range.

Alternatively, or in addition, the controller 40 is arranged to activate a predefined control program or control schedule to control the generated electrical power by the fuel cells 11 by controlling the converter 15 based on the type and/or class of aircraft that is connected to the ground power unit, and/or on the expected length of time that the aircraft is parked at the airport. The inventors particularly noted that the handling of an aircraft at an airport, in particular a passenger air craft, usually comprises the same actions and procedures. Such actions and procedures comprises for example, the disembarking of passengers, unloading luggage, cleaning the aircraft, resupplying the on-board catering, refueling the aircraft, loading new luggage, and boarding of new passengers. During these actions and procedures, the actual power demand of a particular airplane as a function of time can be readily predicted and planned. According to an embodiment of the present invention the generation of electrical power by the fuel cell power plant 10 of the ground power unit 1 is scheduled and/or programmed based on the type and/or class of aircraft, and/or on the expected duration that the aircraft is parked at the airport, in order to ensure that there is always enough electrical power in the set of rechargeable batteries 21 to guarantee an uninterrupted provision of external power to the aircraft by the ground power unit 1. According to an embodiment, the rechargeable battery pack is scheduled and/or programmed to be charged up to 60% of the required electrical power demand for handling of an aircraft at an airport. Preferably, the rechargeable battery pack is scheduled and/or programmed to be charged up to 80% of the required electrical power demand for handling of an aircraft at an airport. It is noted that the required electrical power demand for handling of an aircraft, refers to the so called 'Hotel load'. Accordingly, the battery pack is charged to hold an amount of electrical power which is more than half the expected power demand for handling of an aircraft at the airport, before the ground power unit is connected to an aircraft. Accordingly, enough power is available in the battery pack to immediately supply electrical power to the aircraft as soon as the aircraft is connected to the ground power unit. Accordingly, the ground power unit of the inventions has substantially no startup time.

In a further exemplary embodiment, one or more of the wheels of the undercarriage 2 is provided with a motor, preferable an in-wheel motor, for driving a rotation of said one or more wheels. This motor is preferably an electro-motor which is connected to the set of rechargeable batteries 21 for supplying power to said motor. The motor allows to relocate and/or move the ground power unit 1 over a short distance, for example up to 200 meters, without the need of a tractor to tow the ground power unit 1.

It is to be understood that the above description is included to illustrate the operation of the preferred embodiments and is not meant to limit the scope of the invention. From the above discussion, many variations will be apparent to one skilled in the art that would yet be encompassed by the scope of the present invention.

## Claims

1. Ground power unit (1) for supplying electrical power to an external load, the ground power unit (1) comprising:
a rechargeable battery pack (20), and
an inverter (30) comprising an input which is connected to the rechargeable battery pack (20), and an output for connecting the ground power unit (1) to the external load, wherein the inverter (30) is arranged to convert DC electrical power from the rechargeable battery pack (20) into an AC power output,
**characterized by**
a fuel cell power plant (10) which is connected to the rechargeable battery pack (20) via a converter (15), which converter (15) is arranged to convert the current and/or voltage from the fuel cells (11) to a level which allows to charge the rechargeable battery pack (20), and
a controller (40) which is arranged for controlling the converter (15) based on the power level of the rechargeable battery pack (20) and/or on the amount of electrical power demanded by said load, wherein the ground power unit (1) is arranged to determine the actual charging conditions of rechargeable battery pack (20), and to control the converter (15) based on the actual charging conditions,
wherein the controller (40) is arranged to set the power output of the converter (15) and wherein the fuel cell power plant (10) comprises an internal controller (13) which is configured to adjust the power output of the fuel cell power plant (10) as demand for power output of the converter (15) changes.

2. Ground power unit (1) according to claim 1, wherein the inverter comprises an AC/AC converter which is arranged to convert 50 Hz AC into 400 Hz AC, wherein the AC/AC converter comprises an AC(50Hz)/DC converter (31) which is arranged in series with a DC/AC(400Hz) converter (32), wherein the output of the rechargeable battery pack (20) and/or of the fuel cell power plant (30) is connected to the DC input of the DC/AC(400Hz) converter (32).

3. Ground power unit (1) according to claim 2, wherein the AC(50Hz)/DC converter (31) is connected to a connector (33) for coupling the ground power unit (1) to an external power grid, preferably the public power grid.

4. Ground power unit (1) according to any one of the claims 1 - 3, wherein the ground power unit (1) is designed to provide external power to the external load, wherein the fuel cell power plant (10) comprises one or more fuel cells (11) which are arranged to provide a maximum power output, wherein the maximum power output is selected at a level between an average required power and a maximum peak power of said external load, preferably wherein the maximum power output of the one or more fuel cells (11) is selected in a range from 110% to 150% of the average required power of said external load.

5. Ground power unit (1) according to any one of the claims 1 - 4, wherein the controller (40) is arranged to control the magnitude of the generated electrical power by the fuel cell power plant (10) by controlling the converter (15) on the basis of the total stored electrical power in the rechargeable battery pack (20).

6. Ground power unit (1) according to claim 5, wherein the controller (40) is arranged to vary the magnitude of the generated electrical power by the fuel cell power plant (10) by controlling the converter (15) in accordance with a substantial continues function of the total stored electrical power in the rechargeable battery pack (20).

7. Ground power unit (1) according to claim 5, wherein the controller (40) is arranged to set the magnitude of the generated electrical power by the fuel cell power plant (10) to a particular level when the total stored electrical power in the rechargeable battery pack (20) is in a certain range.

8. Ground power unit (1) according to any one of the claims 1 - 7, wherein the controller (40) is arranged to control the magnitude of the generated electrical power by the fuel cell power plant (10) by controlling the converter (15) on the basis of the actual demand of electrical power by the external load connected to the ground power unit (1).

9. Ground power unit (1) according to claim 8, wherein the controller (40) is arranged to adjust the magnitude of the generated electrical power by the fuel cell power plant (10) by controlling the converter slowly and/or with a certain time delay with respect to a change in the actual power demand of the load.

10. Ground power unit (1) according to claim 8 or 9, wherein the controller (40) is arranged to accelerate the adjustment of the magnitude of the generated electrical power by the fuel cell power plant(10) and/or reduce the time delay of the adjustment of the magnitude of the generated electrical power by the fuel cell power plant (10) with respect to a change in the actual power demand of the load when the total stored electrical power in the rechargeable battery pack (20) decreases.

11. Ground power unit (1) according to any one of the claims 1 - 10, wherein the load is an aircraft and the controller (40) is arranged to activate a predefined
control program or control schedule to control the generated electrical power by the fuel cell power plant (10) by controlling the converter (15) based on the type and/or class of aircraft that is connected to the ground power unit (1), and/or on the expected length of time that the aircraft is parked at the airport.

12. Ground power unit (1) according to claim 11, wherein the generation of electrical power by the fuel cell power plant (10) of the ground power unit (1) is scheduled and/or programmed based on the type and/or class of aircraft, and/or on the expected duration that the aircraft is parked at the airport, in order to ensure that there is always enough electrical power in the rechargeable battery pack (20) to guarantee an uninterrupted provision of external power to the aircraft by the ground power unit (1).

13. Ground power unit (1) according to any one of the claims 1 - 12, wherein the ground power unit (1) comprises a wheeled undercarriage (2), wherein one or more of the wheels of the wheeled undercarriage is provided with a motor, preferable an in-wheel motor, for driving a rotation of said one or more wheels, preferably wherein the motor is an electro-motor which is connected to the rechargeable battery pack (20) for supplying power to said motor.

14. Method for supplying electrical power to an aircraft, wherein the method comprises the steps of:
connecting a ground power unit (1) according to any one of the claims 1 - 13 to an aircraft, and
using the ground power unit (1) to provide external electrical power to the aircraft, preferably to allow electrical systems of said aircraft to operate without the need to operate the aircraft engines.

## Patentansprüche

1. Bodenstromaggregat (1) zur Versorgung einer externen Last mit
elektrischer Leistung, wobei das Bodenstromaggregat (1) umfasst:
ein wiederaufladbares Batteriepack (20) und
einen Wechselrichter (30) mit einem Eingang, der mit dem wiederaufladbaren Batteriepack (20) angeschlossen ist, und einem Ausgang zum Anschließen des Bodenstromaggregats (1) an die externe Last, wobei der Wechselrichter (30) so angeordnet ist, dass er elektrische Gleichstromleistung von dem wiederaufladbaren Batteriepack (20) in eine Wechselstromleistung umwandelt,
**gekennzeichnet durch**
ein Brennstoffzellenkraftwerk (10), das über einen Umrichter (15) an dem wiederaufladbaren Batteriepack (20) angeschlossen ist, wobei der Umrichter (15) so angeordnet ist, dass er den Strom und/oder die Spannung von den Brennstoffzellen (11) auf einen Pegel umwandelt, der das Laden des wiederaufladbaren Batteriepackes (20) ermöglicht, und
eine Steuerung (40), die zum Steuern des Umrichters (15) auf der Grundlage des Leistungspegels des wiederaufladbaren Batteriepackes (20) und/oder der Menge an elektrischer Leistung, die von der Last angefordert wird, angeordnet ist, wobei das Bodenstromaggregat (1) so angeordnet ist, dass es die tatsächlichen Ladebedingungen des wiederaufladbaren Batteriepackes (20) bestimmt und den Umrichter (15) auf der Grundlage der tatsächlichen Ladebedingungen steuert,
wobei die Steuerung (40) so angeordnet ist, dass sie die Leistungsabgabe des Umrichters (15) einstellt, und wobei das Brennstoffzellenkraftwerk (10) eine interne Steuerung (13) umfasst, die so eingerichtet ist, dass er die Leistungsabgabe des Brennstoffzellenkraftwerks (10) anpasst, wenn sich der Bedarf an Leistungsabgabe des Umrichters (15) ändert.

2. Bodenstromaggregat (1) nach Anspruch 1, wobei der Wechselrichter einen Wechselstrom/Wechselstromumrichter umfasst, der so angeordnet ist, dass er 50 Hz Wechselstrom in 400 Hz Wechselstrom umwandelt, wobei der Wechselstrom/Wechselstromumrichter einen Wechselstrom(50 Hz)/Gleichstromumrichter (31) umfasst, der in Reihe mit einem Gleichstrom/Wechselstrom(400 Hz)-Umrichter (32) angeordnet ist, wobei der Ausgang des wiederaufladbaren Batteriepacks (20) und/oder des Brennstoffzellenkraftwerks (30) mit dem Gleichstromeingang des Gleichstrom/Wechselstrom(400 Hz)-Umrichters (32) angeschlossen ist.

3. Bodenstromaggregat (1) nach Anspruch 2, wobei der Wechselstrom(50 Hz)/Gleichstromumrichter (31) an einen Anschluss (33) zur Kopplung des Bodenstromaggregats (1) an ein externes Stromnetz, vorzugsweise das öffentliche Stromnetz, angeschlossen ist.

4. Bodenstromaggregat (1) nach einem der Ansprüche 1 bis 3, wobei das Bodenstromaggregat (1) so ausgelegt ist, dass es die externe Last mit externer Leistung versorgt, wobei das Brennstoffzellenkraftwerk (10) eine oder mehrere Brennstoffzellen (11) umfasst, die so angeordnet sind, dass sie eine maximale Ausgangsleistung bereitstellen, wobei die maximale Ausgangsleistung auf einem Pegel zwischen einer durchschnittlich erforderlichen Leistung und einer maximalen Spitzenleistung der externen Last ausgewählt ist, wobei die maximale Ausgangsleistung der einen oder mehreren Brennstoffzellen (11) vorzugsweise in einem Bereich von 110 % bis 150 % der durchschnittlich erforderlichen Leistung der externen Last ausgewählt ist.

5. Bodenstromaggregat (1) nach einem der Ansprüche 1 bis 4, wobei die Steuerung (40) so angeordnet ist, dass sie die Größe der von dem Brennstoffzellenkraftwerk (10) erzeugten elektrischen Leistung durch Steuern des Umrichters (15) auf der Grundlage der gesamten gespeicherten elektrischen Leistung in dem wiederaufladbaren Batteriepack (20) steuert.

6. Bodenstromaggregat (1) nach Anspruch 5, wobei die Steuerung (40) so angeordnet ist, dass sie die Größe der von dem Brennstoffzellenkraftwerk (10) erzeugten elektrischen Leistung durch Steuern des Umrichters (15) in Übereinstimmung mit einer im Wesentlichen fortlaufenden Funktion der gesamten gespeicherten elektrischen Leistung in dem wiederaufladbaren Batteriepack (20) verändert.

7. Bodenstromaggregat (1) nach Anspruch 5, wobei die Steuerung (40) so angeordnet ist, dass sie die Größe der von dem Brennstoffzellenkraftwerk (10) erzeugten elektrischen Leistung auf einen bestimmten Pegel einstellt, wenn die gesamte gespeicherte elektrische Leistung in dem wiederaufladbaren Batteriepack (20) in einem bestimmten Bereich liegt.

8. Bodenstromaggregat (1) nach einem der Ansprüche 1 bis 7, wobei die Steuerung (40) so angeordnet ist, dass sie die Größe der von dem Brennstoffzellenkraftwerk (10) erzeugten elektrischen Leistung durch Steuern des Umrichters (15) auf der Grundlage des tatsächlichen Bedarfs an elektrischer Leistung durch die an das Bodenstromaggregat (1) angeschlossene externe Last regelt.

9. Bodenstromaggregat (1) nach Anspruch 8, wobei die Steuerung (40) so angeordnet ist, dass sie die Größe der von dem Brennstoffzellenkraftwerk (10) erzeugten elektrischen Leistung durch langsame und/oder zeitlich verzögerte Steuerung des Umrichters mit einer bestimmten Zeitverzögerung in Bezug auf eine Änderung des tatsächlichen Leistungsbedarfs der Last anpasst.

10. Bodenstromaggregat (1) nach Anspruch 8 oder 9, wobei die Steuerung (40) so angeordnet ist, dass sie die Anpassung der Größe der erzeugten elektrischen Leistung durch das Brennstoffzellenkraftwerk (10) beschleunigt und/oder die Zeitverzögerung der Anpassung der Größe der erzeugten elektrischen Leistung durch das Brennstoffzellenkraftwerk (10) in Bezug auf eine Änderung des tatsächlichen Leistungsbedarfs der Last verringert, wenn die gesamte gespeicherte elektrische Leistung in dem wiederaufladbaren Batteriepack (20) abnimmt.

11. Bodenstromaggregat (1) nach einem der Ansprüche 1 bis 10, wobei es sich die Last ein Flugzeug ist und die Steuereinheit (40) so angeordnet ist, dass sie ein vordefiniertes Steuerprogramm oder einen Steuerplan aktiviert, um die von dem Brennstoffzellenkraftwerk (10) erzeugte elektrische Leistung zu steuern, indem sie den Umrichter (15) auf der Grundlage des Typs und/oder der Klasse des Flugzeugs, das an das Bodenstromaggregat (1) angeschlossen ist, und/oder der erwarteten Dauer, die das Flugzeug auf dem Flughafen geparkt ist, steuert.

12. Bodenstromaggregat (1) nach Anspruch 11, wobei die Erzeugung elektrischer Leistung durch das Brennstoffzellenkraftwerk (10) des Bodenstromaggregats (1) auf der Grundlage des Flugzeugtyps und/oder der Flugzeugklasse und/oder der erwarteten Dauer, während der das Flugzeug auf dem Flughafen geparkt ist, geplant und/oder programmiert wird, um sicherzustellen, dass immer genügend elektrische Leistung in dem wiederaufladbaren Batteriepack (20) vorhanden ist, um eine ununterbrochene Versorgung des Flugzeugs mit externer Leistung durch das Bodenstromaggregat (1) zu gewährleisten.

13. Bodenstromaggregat (1) nach einem der Ansprüche 1 bis 12, wobei das Bodenstromaggregat (1) ein mit Rädern versehenes Fahrgestell (2) umfasst, wobei eines oder mehrere der Räder des mit Rädern versehenen Fahrgestells mit einem Motor, vorzugsweise einem In-Wheel-Motor, zum Antreiben einer Drehung des einen oder der mehreren Räder versehen ist, wobei der Motor vorzugsweise ein Elektromotor ist, der an den wiederaufladbaren Batteriepack (20) zur Stromversorgung des Motors angeschlossen ist.

14. Verfahren zur Versorgung eines Flugzeugs mit elektrischer Leistung, wobei das Verfahren die Schritte umfasst:
Anschließen eines Bodenstromaggregats (1) nach einem der Ansprüche 1 bis 13 an ein Flugzeug, und
Verwendung des Bodenstromaggregats (1), um das Flugzeug mit externer elektrischer Leistung zu versorgen, vorzugsweise um den Betrieb der elektrischen Systeme des Flugzeugs zu ermöglichen, ohne dass die Flugzeugmotoren betrieben werden müssen.

## Revendications

1. Unité d'alimentation électrique au sol (1) destinée à apporter de la puissance électrique à une charge externe, l'unité d'alimentation électrique au sol (1) comprenant :
un bloc-batterie rechargeable (20), et
un onduleur (30) comprenant une entrée qui est connectée au bloc-batterie rechargeable (20), et une sortie destinée à connecter l'unité d'alimentation électrique au sol (1) à la charge externe, dans laquelle l'onduleur (30) est conçu pour convertir la puissance électrique CC provenant du bloc-batterie rechargeable (20) en puissance de sortie CA,
**caractérisée par**
une installation électrique à piles à combustible (10) qui est connectée au bloc-batterie rechargeable (20) via un convertisseur (15), lequel convertisseur (15) est conçu pour convertir le courant et/ou la tension provenant des piles à combustible (11) en un niveau qui permet de charger le bloc-batterie rechargeable (20), et
un dispositif de commande (40) qui est conçu pour commander le convertisseur (15) sur la base du niveau de puissance du bloc-batterie rechargeable (20) et/ou de la quantité de puissance électrique demandée par ladite charge, dans laquelle l'unité d'alimentation électrique au sol (1) est conçue pour déterminer les conditions de charge réelles du bloc-batterie rechargeable (20), et pour commander le convertisseur (15) sur la base des conditions de charge réelles,
dans laquelle le dispositif de commande (40) est conçu pour régler la puissance de sortie du convertisseur (15) et dans laquelle l'installation électrique à piles à combustible (10) comprend un dispositif de commande interne (13) qui est configuré pour ajuster la puissance de sortie de l'installation électrique à piles à combustible (10) quand la demande en puissance de sortie du convertisseur (15) change.

2. Unité d'alimentation électrique au sol (1) selon la revendication 1, dans laquelle l'onduleur comprend un convertisseur CA/CA qui est conçu pour convertir du CA 50 Hz en CA 400 Hz, dans laquelle le convertisseur CA/CA comprend un convertisseur CA (50 Hz)/CC (31) qui est agencé en série avec un convertisseur CC/CA (400 Hz) (32), dans laquelle la sortie du bloc-batterie rechargeable (20) et/ou de l'installation électrique à piles à combustible (30) est connectée à l'entrée CC du convertisseur CC/CA (400 Hz) (32).

3. Unité d'alimentation électrique au sol (1) selon la revendication 2, dans laquelle le convertisseur CA (50 Hz)/CC (31) est connecté à un connecteur (33) pour coupler l'unité d'alimentation électrique au sol (1) à un réseau électrique externe, de préférence le réseau électrique public.

4. Unité d'alimentation électrique au sol (1) selon l'une quelconque des revendications 1-3, dans laquelle l'unité d'alimentation électrique au sol (1) est conçue pour fournir de la puissance externe à la charge externe, dans laquelle l'installation électrique à piles à combustible (10) comprend une ou plusieurs piles à combustible (11) qui sont conçues pour fournir une puissance de sortie maximale, dans laquelle la puissance de sortie maximale est sélectionnée à un niveau entre une puissance requise moyenne et une puissance de crête maximale de ladite charge externe, de préférence dans laquelle la sortie de puissance maximale des une ou plusieurs piles à combustible (11) est sélectionnée dans une plage de 110 % à 150 % de la puissance requise moyenne de ladite charge externe.

5. Unité d'alimentation électrique au sol (1) selon l'une quelconque des revendications 1-4, dans laquelle le dispositif de commande (40) est conçu pour commander l'amplitude de la puissance électrique générée par l'installation électrique à piles à combustible (10) en commandant le convertisseur (15) sur la base de la puissance électrique stockée totale dans le bloc-batterie rechargeable (20).

6. Unité d'alimentation électrique au sol (1) selon la revendication 5, dans laquelle le dispositif de commande (40) est conçu pour faire varier l'amplitude de la puissance électrique générée par l'installation électrique à piles à combustible (10) en commandant le convertisseur (15) conformément à une fonction continue substantielle de la puissance électrique stockée totale dans le bloc-batterie rechargeable (20).

7. Unité d'alimentation électrique au sol (1) selon la revendication 5, dans laquelle le dispositif de commande (40) est conçu pour régler l'amplitude de la puissance électrique générée par l'installation électrique à piles à combustible (10) à un niveau particulier lorsque la puissance électrique stockée totale dans le bloc-batterie rechargeable (20) est dans une certaine plage.

8. Unité d'alimentation électrique au sol (1) selon l'une quelconque des revendications 1-7, dans laquelle le dispositif de commande (40) est conçu pour commander l'amplitude de la puissance électrique générée par l'installation électrique à piles à combustible (10) en commandant le convertisseur (15) sur la base de la demande réelle de puissance électrique par la charge externe connectée à l'unité de puissance électrique au sol (1).

9. Unité d'alimentation électrique au sol (1) selon la revendication 8, dans laquelle le dispositif de commande (40) est conçu pour ajuster l'amplitude de la puissance électrique générée par l'installation électrique à piles à combustible (10) en commandant le convertisseur (15) lentement et/ou avec un certain retard par rapport à un changement de la demande de puissance réelle de la charge.

10. Unité d'alimentation électrique au sol (1) selon la revendication 8 ou 9, dans laquelle le dispositif de commande (40) est conçu pour accélérer l'ajustement de l'amplitude de la puissance électrique générée par l'installation électrique à piles à combustible (10) et/ou réduire le retard de l'ajustement de l'amplitude de la puissance électrique générée par l'installation électrique à piles à combustible (10) par rapport à un changement de la demande de puissance réelle de la charge lorsque la puissance électrique stockée totale dans le bloc-batterie rechargeable (20) diminue.

11. Unité d'alimentation électrique au sol (1) selon l'une quelconque des revendications 1-10, dans laquelle la charge est un aéronef et le dispositif de commande (40) est conçu pour activer un programme de commande ou calendrier de commande prédéfini pour commander la puissance électrique générée par l'installation électrique à piles à combustible (10) en commandant le convertisseur (15) sur la base du type et/ou de la classe d'aéronef qui est connecté à l'unité d'alimentation électrique au sol (1), et/ou de la durée de stationnement prévue de l'aéronef à l'aéroport.

12. Unité d'alimentation électrique au sol (1) selon la revendication 11, dans laquelle la génération de puissance électrique par l'installation électrique à piles à combustible (10) de l'unité d'alimentation électrique au sol (1) est planifiée et/ou programmée sur la base du type et/ou de la classe d'aéronef, et/ou de la durée de stationnement prévue de l'aéronef à l'aéroport, afin de s'assurer qu'il y a toujours suffisamment de puissance électrique dans le bloc-batterie rechargeable (20) pour garantir un approvisionnement ininterrompu de puissance externe à l'aéronef par l'unité d'alimentation électrique au sol (1).

13. Unité d'alimentation électrique au sol (1) selon l'une quelconque des revendications 1-12, dans laquelle l'unité d'alimentation électrique au sol (1) comprend un châssis sur roues (2), dans laquelle une ou plusieurs des roues du châssis sur roues est pourvue d'un moteur, de préférence un moteur dans roue, pour entraîner une rotation desdites une ou plusieurs roues, de préférence dans laquelle le moteur est un électromoteur qui est connecté au bloc-batterie rechargeable (20) pour apporter de la puissance audit moteur.

14. Procédé pour apporter de la puissance électrique à un aéronef, dans lequel le procédé comprend les étapes consistant à :
connecter une unité d'alimentation électrique au sol (1) selon l'une quelconque des revendications 1-13 à un aéronef, et
utiliser l'unité d'alimentation électrique au sol (1) pour fournir de la puissance électrique externe à l'aéronef, de préférence pour permettre à des systèmes électriques dudit aéronef de fonctionner sans avoir besoin de faire fonctionner les moteurs de l'aéronef.
